# EUROPEAN PATENT APPLICATION

(11) **EP 2 369 835 A2**
(43) Date of publication of application: **28.09.2011**
(21) Application number: 11159681.3
(22) Date of filing: 24.03.2011
(51) Int. Cl.: H04N 5/445, H04N 7/173

(54) **Providing on-demand and broadcast television**

(30) Priority: 26.03.2010 GB 1005090
(71) Applicant: British Broadcasting Corporation, London W12 7TS (GB)
(72) Inventor: Murison, Jane, London, W12 7TS (GB); Greenham, Andrew, London, W12 7TS (GB); Gammon, Ben, London, W12 7TS (GB); Still, Amelia, London, W12 7TS (GB)
(74) Representative: Leaves, Paul

(57) **Abstract**

A television receiver apparatus is described. The television receiver apparatus comprises an input interface arranged to receive commands from a user, a communication interface arranged to send and receive data over a one-to-one communication network, a broadcast receiver arranged to receive data sent over a broadcast network, a display interface arranged to connect to a display device, and a processor. The processor controls the display device to display an electronic programme guide comprising a schedule of programmes currently being broadcast, programmes to be broadcast after the current time, and programmes previously broadcast in a time period prior to the current time. The processor receives a request to view a selected programme displayed in the electronic programme guide, retrieves the selected programme from the communication network if the selected programme was previously broadcast in the time period, and controls the display device to display the selected programme.

## Description

### BACKGROUND

Traditionally, television programmes have been broadcast using a fixed schedule, such that particular programmes are scheduled to be broadcast at particular times. On-demand television offers the potential to change this model, such that any television programme can be delivered immediately to a user, irrespective of any broadcast schedule.

However, because users are unfamiliar with on-demand television, they can find it difficult to locate and access programmes that they want to watch. In particular, the users can be overwhelmed by the selection of programmes available to them on-demand. This can lead to them only watching a small subset of programmes that they are familiar with, and not making use of the breadth of programming available.

Search engines can be provided to enable the user to search for particular programmes available on-demand, but this requires an additional level of interaction and data input from the user, which can be time-consuming and difficult, particularly using a television remote control.

Alternatively, lists of the most popular programmes can be displayed to the user, but these do not necessarily correlate with a given user's tastes. Recommendation algorithms can be used to suggest certain programmes to the user, but the success of these is dependent on having accurate data on the user's preferences, and these algorithms frequently do not work well in the case that many users are using the same television (e.g. in a family setting).

As a result, many users simply revert to viewing broadcast television, even when on-demand content is available.

### SUMMARY

According to one aspect of the invention, there is provided a television receiver apparatus, comprising: an input interface arranged to receive commands from a user; a communication interface arranged to send and receive data over a one-to-one communication network; a broadcast receiver arranged to receive data sent over a broadcast network; a display interface arranged to connect to a display device; and a processor arranged to: control the display device using the display interface to display an electronic programme guide comprising a schedule of programmes currently being broadcast, programmes to be broadcast after the current time, and programmes previously broadcast in a time period prior to the current time; receive via the input interface a request to view a selected programme displayed in the electronic programme guide; retrieve the selected programme from the communication network using the communication interface if the selected programme was previously broadcast in the time period; and control the display device using the display interface to display the selected programme.

Because the electronic programme guide (EPG) displays past schedule information, i.e. the schedule of programmes that have already been broadcast, and the previously broadcast programmes can be selected from the EPG and viewed from the one-to-one communication network, on-demand and broadcast television is seamlessly accessed through a single unified user interface. Users are familiar with the use of EPGs showing upcoming programmes, and providing an EPG additionally showing previously broadcast programmes gives an efficiently integrated and rapidly accessed way of delivering on-demand programme content without requiring additional knowledge on the part of the user.

Furthermore, because the EPG displays a schedule comprising the previously broadcast programmes in the same user interface as the currently broadcast programmes, the users can readily determine how long ago the selected programme was broadcast, which assists the user in viewing the most recent episodes of a programme or programmes that they have just missed being broadcast. In addition, by displaying those programmes that were recently broadcast, the user is not overwhelmed by large lists of all the programmes available on-demand.

The processor may be further arranged to retrieve the selected programme from the broadcast network using the broadcast receiver if the selected programme is currently being broadcast.

If the selected programme is currently being broadcast, then the programme is accessed via the broadcast network, as this is more spectrum/bandwidth efficient than on-demand delivery. The user does not need to be aware of the manner in which the programme content is being delivered, be it on-demand via the one-to-one communication network, or broadcast via the broadcast network.

The processor may be further arranged to determine whether the selected programme is available from the communication network if the selected programme is to be broadcast after the current time. If the processor determines that the selected programme is available from the communication network, the processor may be further arranged to the retrieve the selected programme from the communication network using the communication interface. If the processor determines that the selected programme is not available from the communication network, the processor may be further arranged to record the selected programme from the broadcast network using the broadcast receiver at its time of broadcast. If the processor determines that the selected programme is not available from the communication network, the processor may be further arranged to display a reminder message to the user at the time of broadcast of the selected programme.

If the selected programme is to be broadcast in the future, then it is ascertained whether the programme is available immediately as on-demand content. If so, this enables the user to view the selected programme without having to wait for the scheduled broadcast time. This provides further integration of on-demand content into the EPG user interface. If the selected programme is not available on-demand, then the user can be reminded at the broadcast time, or the selected programme recorded from the broadcast network to a local storage device, which ensures that the user is still able to view the programme, either at the broadcast time, or subsequently.

The apparatus may further comprise a data storage device, and the processor may be further arranged to determine whether the selected programme is stored on the data storage device prior to retrieving the selected programme from the communication network.

By providing a data storage device at the television receiver apparatus, programme content can be cached locally. Programmes stored locally can be delivered to the user without using the network bandwidth used for providing on-demand content over the communication network.

The processor may be further arranged to retrieve the electronic programme guide schedule from at least one of: the broadcast network using the broadcast receiver; and the communication network using the communication interface. The processor may be further arranged to render the electronic programme guide in tabular form for display on the display device.

According to another aspect of the invention, there is provided a set-top box comprising the above receiver apparatus.

According to another aspect of the invention, there is provided a television set comprising the above receiver apparatus.

According to another aspect of the invention, there is provided a method of retrieving a television programme at a television receiver arranged to receive data sent over a broadcast network and send and receive data over a one-to-one communication network, comprising: controlling a display device connected to the television receiver to display an electronic programme guide comprising a schedule of programmes currently being broadcast, programmes to be broadcast after the current time, and programmes previously broadcast in a time period prior to the current time; receiving a user request to view a selected programme displayed in the electronic programme guide; retrieving the selected programme from the communication network if the selected programme was previously broadcast in the time period; and controlling the display device to display the selected programme.

The method may further comprise the step of retrieving the selected programme from the broadcast network if the selected programme is currently being broadcast.

The method may further comprise the step of determining whether the selected programme is available from the communication network if the selected programme is to be broadcast after the current time. The method may further comprise the step of retrieving the selected programme from the communication network if the step of determining determines that the selected programme is available from the communication network. The method may further comprise the step of recording the selected programme from the broadcast network at its time of broadcast if the step of determining determines that the selected programme is not available from the communication network. The method may further comprise the step of displaying a reminder message to the user at the time of broadcast of the selected programme if the step of determining determines that the selected programme is not available from the communication network.

The method may further comprise the step of determining whether the selected programme is stored on a data storage device at the television receiver prior to retrieving the selected programme from the communication network. The method may further comprise the step of retrieving the electronic programme guide schedule from at least one of the broadcast network, and the communication network. The method may further comprise the step of renders the electronic programme guide in tabular form for display on a display device.

According to another aspect of the invention, there is provided a computer program comprising computer program code means adapted to perform all the steps of the above method when said program is run on a computer. The computer program may be embodied on a computer readable medium.

The methods described herein may be performed by software in machine readable form on a storage medium. The software can be suitable for execution on a parallel processor or a serial processor such that the method steps may be carried out in any suitable order, or simultaneously. This is intended to encompass software which runs on or controls standard hardware to carry out the desired functions. It is also intended to encompass software which describes or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 illustrates a system for delivering both on-demand and broadcast television programmes;
FIG. 2 illustrates a block diagram of a television receiver;
FIG. 3 illustrates a flow chart of a process for displaying an EPG and selecting on-demand and broadcast programmes; and
FIG. 4 illustrates an example EPG display.

Like reference numerals are used to designate like parts in the accompanying drawings.

### DETAILED DESCRIPTION

The detailed description provided below in connection with the appended drawings is intended as a description of the present examples and is not intended to represent the only forms in which the present example can be constructed or utilised. The description sets forth the functions of the example and the sequence of steps for constructing and operating the example. However, the same or equivalent functions and sequences may be accomplished by different examples.

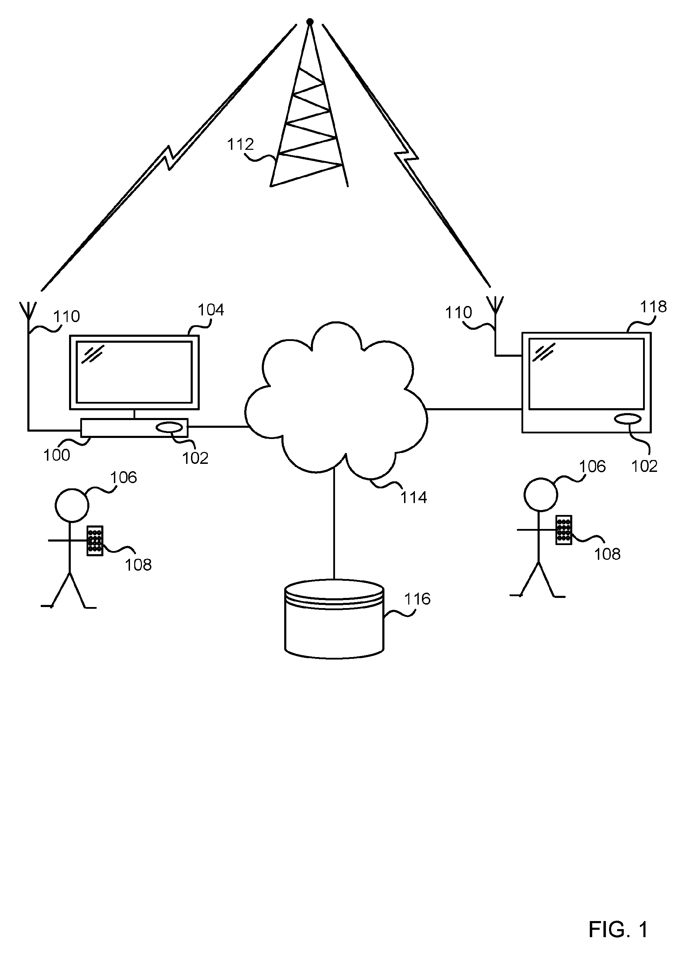

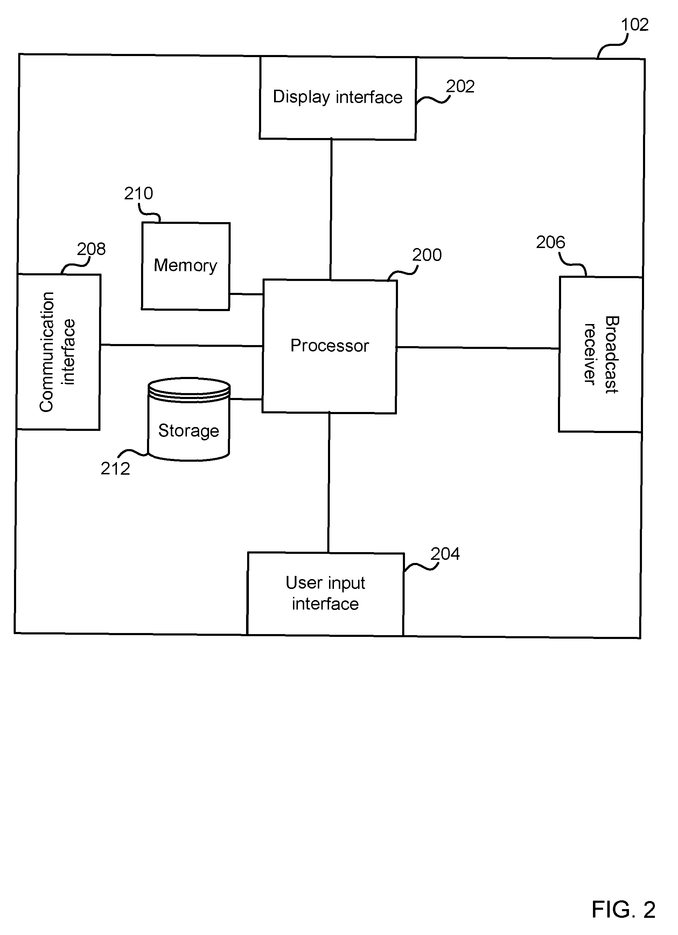

Reference is first made to FIG. 1, which illustrates a system for delivering both on-demand and broadcast television programmes. The system of FIG. 1 includes a set-top box 100 that comprises a television receiver apparatus 102, as will be described in more detail with FIG. 2 hereinafter. The set-top box 100 is connected to a television set 104 arranged to display video (and optionally audio) content to a user 106. The user 106 can control the set-top box 100 and input commands using a remote control 108.

The set-top box 100 is connected to an antenna 110 which is arranged to receive digital broadcast data signals from a broadcast network 112. The term broadcast is intended to cover any form of one-to-many content distribution, and the term broadcast network is intended to encompass the infrastructure used by a broadcaster to distribute content. The digital broadcast data signals comprise television programmes, i.e. audiovisual content suitable for viewing on a television set.

Note that whilst FIG. 1 illustrates a terrestrial broadcast network, any suitable broadcast network can be used, such as satellite broadcast (in which case antenna 110 can be in the form of a parabolic dish) or cable distribution (in which case no antenna is required, but a wired connection to the cable network is used). For example, the broadcast network 112 can be a digital video broadcasting-terrestrial (DVB-T), digital video broadcasting-satellite (DVB-S), and/or digital video broadcasting-cable (DVB-C) system.

The set-top box 100 is also connected to a one-to-one communication network 114, such as the Internet. A one-to-one communication network is a network arranged to provide individually addressed data to a specific device. In other words, a network capable of delivering unicast data.

Optionally, the set-top box 100 can be connected to the communication network via one or more intermediate network elements, such as a router or modem, or one or more intermediate networks, such as a local area network or wireless network (not shown in FIG. 1).

Connected to the communication network 114 are one or more network servers 116 that are arranged to deliver television programmes (i.e. audiovisual content suitable for viewing on a television set similar to that delivered by the broadcast network) over the communication network. In other words, the servers 116 are arranged to provide on-demand television programmes to the set-top box 100 via the communication network 114. The servers 116 can be operated by the same broadcaster providing the television content over the broadcast network 112, or operated by a third party.

The term on-demand is intended to cover television programmes that are provided to a user responsive to a specific request for that programme. The delivery of the on-demand programme over the one-to-one communication network 114 does not need to be instantaneous, and can be subject to delays due to, for example, server loading or network congestion.

In use, the television receiver apparatus 102 in the set-top box 100 is arranged to receiver either television programmes broadcast over the broadcast network 112 or television programmes fetched on-demand from the servers 116 over the communication network 114. The operation of the television receiver apparatus 102 is described in more detail below with reference to FIG. 2.

FIG. 1 also illustrates a television set 118 having an integrated television receiver apparatus 102, enabling the television set 118 to connect to the broadcast network 112 and communication network 114 without the use of a set-top box.

Reference is now made to FIG. 2, which illustrates the structure of television receiver apparatus 102 in more detail. The television receiver apparatus 102 comprises at least one processor 200 arranged to execute instructions (in the form of software code) to control the operation of the television receiver apparatus 102. The processor 200 is connected to a display interface 202, which is arranged to interface with the television set 104 such that the television set 104 can be controlled to display video (e.g. television programmes) or present one or more user interfaces to the user 108, as described hereinafter. Also connected to the processor 200 is a user input interface 204 arranged to receive inputs from the user 108, e.g. from the remote control 108, and provide these to the processor 200 in the form of commands.

The processor 200 is further connected to a broadcast receiver, which is arranged to receive data signals from the broadcast network 112 (e.g. via the antenna 110), and decode them to produce television programme content. For example, in the case of a terrestrial broadcast network, the broadcast receiver 206 can comprise a radio frequency receiver, analogue to digital converter, demodulator and decoder. However, the detailed implementation of the broadcast receiver 206 is dependent on the transmission technology used for the broadcast network (e.g. terrestrial, satellite or cable). The processor 200 controls the broadcast receiver 206 to select a particular broadcast to receive.

The processor 200 is also connected to a communication interface 208. The communication interface is arranged to interface (directly or indirectly) with the one-to-one communication network 114 to enable the processor 200 to transmit and receive data over the communication network 114. The communication interface 208 can comprise data networking functionality (e.g. Ethernet or modem functionality) or can comprise simple data exchange functionality for communicating with an intermediate network element (such as USB).

A memory 210 can be connected to the processor 200 for storing executable instructions that can be run on the processor and for storing data used by the processor during the execution of these instructions. A storage device 212 such as a hard disk or solid state drive can be connected to the processor 200 and arranged to store large quantities of data such as recorded television programmes. Note that, in other examples, the memory 210 and storage device 212 can be integrated. In a further example, the storage device 212 can be separate from the television receiver apparatus 102, for example accessible via the communication interface 208.

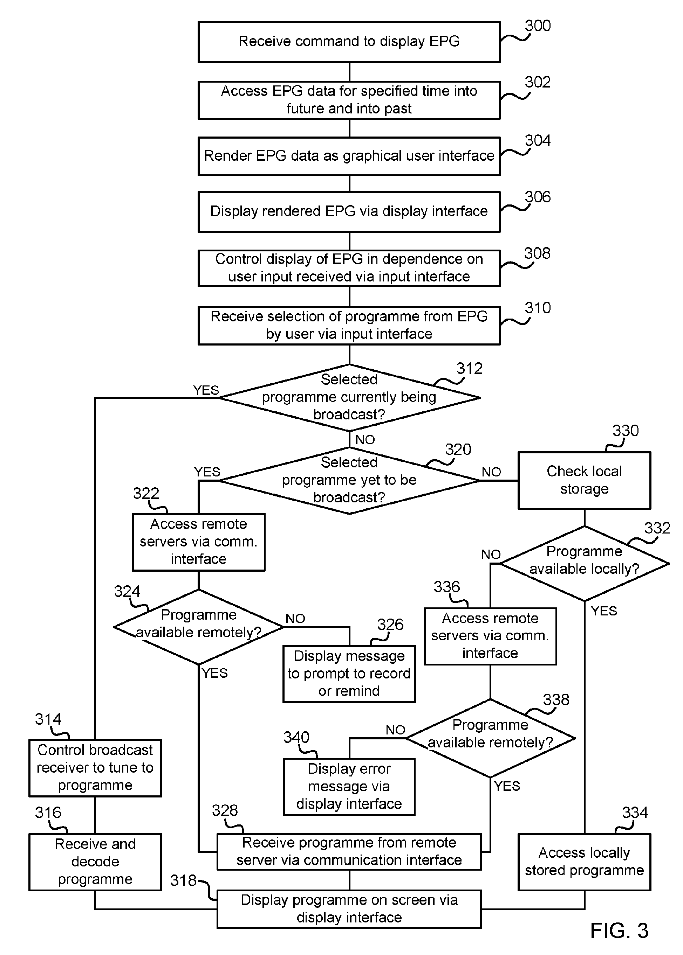

Reference is now made to FIG. 3, which illustrates a flowchart of a process performed by the processor 200 of the television receiver apparatus 102. Firstly, in step 300, the processor 200 receives from the user input interface 204 a command to display an EPG. The command can originate from the user 106 using the remote control 108. Then, in step 302, the processor 200 accesses EPG data to determine the television programme schedule for the current time and a time interval into the future, and also the schedule of programmes previously broadcast for a specified time period into the past. In other words, the EPG data accessed covers the television programs that are yet to be broadcast, and also those that have recently been broadcast.

The time interval into the future and the specified time period into the past do not need to be the same. For example, the EPG data can comprise schedule data for one week into the past, and two weeks into the future. Any suitable time periods can be used, depending on the availability of EPG data, the amount of data storage at the television receiver, and the time period over which on-demand content is available (as described hereinafter).

In some examples, the EPG data can be stored locally at the television receiver apparatus 102 (e.g. at the memory 210 or storage device 212). Alternatively, the EPG data can be stored locally to, but not at, the television receiver apparatus 102 (e.g. within storage at the set top box 100 or television set 118 and accessed via the communication interface 208). If the EPG data is stored locally, it can be periodically updated with data from either the broadcast network 112 (received via the broadcast receiver 206) or the communication network 114 (received via the communication interface 208). The EPG data can be stored as a database, and maintained in accordance with the periodic updates. Alternatively, the EPG data can be fetched when required over the communication network 114 (using the communication interface 208) from a network element such as server 116 (or a separate, dedicated EPG server).

Optionally, the television receiver apparatus 102 can maintain its own EPG of previously broadcast programmes by tracking the programmes being broadcast and storing the schedule information, or alternatively by storing EPG data for upcoming programmes for a length of time until the scheduled broadcast time has passed.

In step 304, the EPG data is rendered as part of a graphical user interface. For example, the EPG data can be rendered as a table with a list of channels along one axis, time along the other axis, and programme information in the cells of the table. The graphical user interface can be paginated, such that the user 106 is only presented with a portion of the whole EPG data (e.g. only a limited time range, limited channel selection, or both), and can move between pages of data as required. In step 306, the processor 200 uses the display interface 202 to control the television set 104, 118 to display the graphical user interface comprising the rendered EPG to the user 106.

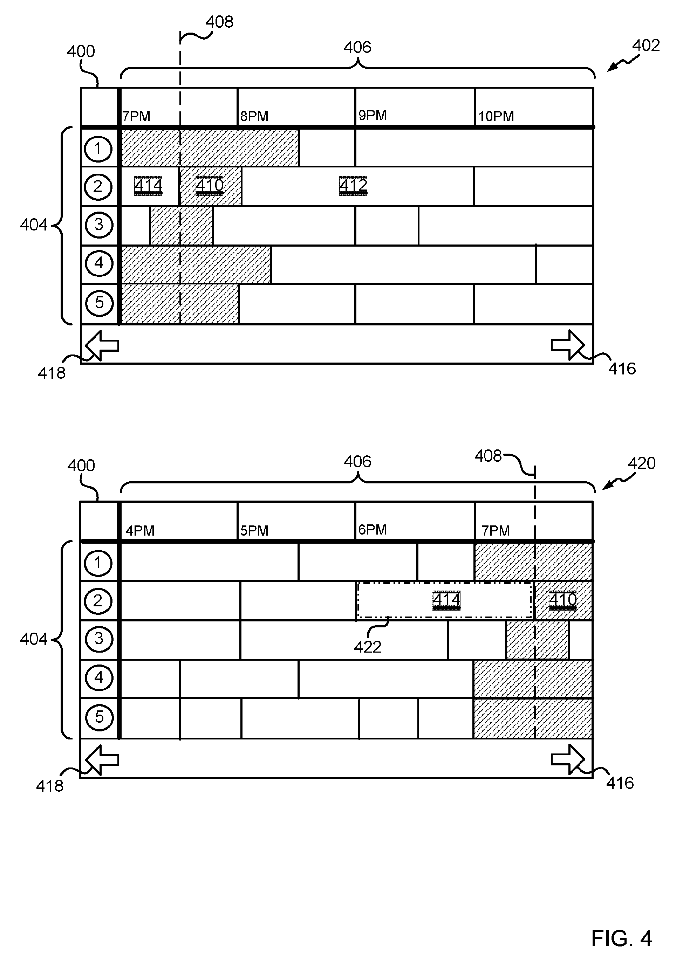

FIG. 4 illustrates an example graphical rendering of an EPG 400. The top of FIG. 4 shows a first view 402 of an EPG 400 comprising a y-axis showing five channels 404 and a x-axis showing time 406. The current time (in this illustrative example, shortly after 7:30pm) is indicated with dashed line 408. In the first view 402, the time axis of the EPG display is aligned to the closest hour prior to the current time (i.e. 7pm in this case). In some examples, this can be the default view for the EPG 400, as it allows the user to readily see the programmes currently being broadcast. However, in other examples, other alignments of the time axis of the EPG can be used.

Programme information, such as titles, is contained within the cells of the EPG 400, and the cells are aligned with the time axis to correspond with the scheduled broadcast time of the programmes. For example, the programmes shown with the diagonal hatching in FIG. 4 are those that are currently being broadcast over the broadcast network112. Considering channel 2 as an example, programme 410 is currently being broadcast (with a start time of 7:30pm), programme 412 is yet to be broadcast (with a start time of 8pm), and programme 414 has recently finished being broadcast (with an end time of 7:30pm).

Returning again to FIG. 3, in step 308 commands are received from the user 106 (via the user input interface 204) to control the display of the EPG 400 on the television set 104, 118. The user 106 can use the remote control 108 to move between the channels 402 shown in the EPG 400 and navigate the time axis to display the schedule information for different times. The user can do this by using dedicated controls on the remote control 108, or by selecting controls in the displayed EPG, such as control 416 shown in FIG. 4 to move forward in time in the schedule and control 418 to move backwards in time in the schedule to display previously broadcast programmes.

The bottom of FIG. 4 shows a second view 420 of the EPG 400 in which the user 106 has navigated back in time in the EPG to display previously broadcast programmes. For example, this could be achieved by the user selecting control 418 whilst the first view 402 was being displayed. The EPG 400 in the second view 420 now shows times earlier than the current time 408 (4pm to 7pm in this example) and the corresponding programmes that were broadcast at this time. The user 106 can choose to go back further in the EPG 400 by repeated selection of control 418, or move forward in time again with selection of control 416.

The user 106 is also able to use the remote control 108 to select an individual programme within the EPG 400, for example as indicated by selection box 422, which is selecting programme 414 in the second view 420. The user can use this selection to perform actions such as retrieving information on the selected programme. In addition, the user is able to request to view the selected programme, as described below with reference to the remainder of FIG. 3.

In step 310, the processor 200 receives a request to view a selected programme displayed in the EPG 400 from the user 106 via the user input interface 204. In step 312, it is determined whether the selected programme is currently being broadcast. In other words, it is determined whether the selected programme is one of those having the diagonal hatching in the example of FIG. 4, such as programme 410.

If the selected programme is currently being broadcast, then in step 314 the processor 200 controls the broadcast receiver 206 to tune to the channel of the selected programme, and the programme is received and decoded in step 316. The processor 200 then displays the selected programme from the broadcast network 112 on the television set 104, 118 in step 318.

The selected programme is viewed using the broadcast network 112 if it is currently being broadcast as it is more bandwidth efficient to obtain the programme using a one-to-many distribution technique such as broadcasting than an one-to-one technique such as on-demand retrieval over the communication network 114. In addition, in some examples, the video quality of the broadcast programmes can be higher than those retrieved on-demand.

Returning to step 312, if it is determined that the selected programme is not currently being broadcast, then in step 320 it is determined whether the selected programme is to be broadcast in the future (e.g. if the selected programme was programme 412 in FIG. 4). If this is the case, then the servers 116 are accessed over the communication network 114 (via the communication interface 208) in step 322, and it is determined in step 324 whether the selected programme is available on-demand. Although the programme has not yet been broadcast, the broadcaster may in some examples make certain programmes available on demand in advance of the scheduled broadcast time.

If the selected programme is not available on-demand via the servers 116, then in step 326 a prompt is optionally displayed to the user 106 in the user interface displayed on the television set 104, 118 enabling the user to select whether to record the selected programme from the broadcast network 112 at its scheduled broadcast time (e.g. to storage device 212) or to be shown a reminder at the broadcast time. This ensures that the user is still able to view the programme, either at the broadcast time, or subsequently.

If the selected programme is determined to be available on-demand in step 324, then in step 328 the selected programme is streamed from the servers 116 over the communication network 114, received via the communication interface 208, and displayed in step 318 on the television 104, 118 via the display interface 202.

Returning again to step 320, if it is determined that the selected programme is not to be broadcast in the future, then the selected programme is one that has previously been broadcast (such as programme 414 in FIG. 4). In this case, in step 330, the storage device 212 is accessed, and it is determined in step 332 whether the selected programme is already stored at the storage device 212. This can occur, for example, if the user has previously chosen to record the selected programme and it was recorded from the broadcast network 112 to the storage device 212. If the selected programme is available at the storage device 212, then the selected programme is accessed on the storage device 212 in step 334 and displayed in step 318 on the television 104, 118 via the display interface 202.

If the selected programme is not available at the storage device 212 in step 332, then the servers 116 are accessed over the communication network 114 (via the communication interface 208) in step 336, and it is determined in step 338 whether the selected programme is available on-demand. If the selected programme is not available on-demand, then an error message notifying the user 106 of the unavailability of the selected programme is displayed in the user interface on the television set 104, 118 in step 340. If, however, the selected programme is available on-demand, then in step 328 the selected programme is streamed from the servers 116 over the communication network 114, received via the communication interface 208, and displayed in step 318 on the television 104, 118 via the display interface 202.

The above-described process therefore combines both on-demand and broadcast delivery of television programmes into a single EPG user interface. The user 106 does not need to be aware of the delivery method of the programme that has been selected. Because the EPG extends backwards in time, it can be used to access content that is available on-demand in a manner that is familiar and easily understood to the user. For example, the user can use the EPG to rapidly see what programmes they have missed that evening, or the previous day, which represents a high proportion of the on-demand content requested.

Those skilled in the art will appreciate that memory devices utilised to store program instructions can be distributed across a network. For example, a remote computer may store an example of the process described above. A local processor may access the remote computer and download a part or all of the software to run the program. Alternatively, the local processor may download pieces of the software as needed, or execute some software instructions at the local processor and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. It will further be understood that reference to 'an' item refer to one or more of those items. The steps of the methods described herein may be carried out in any suitable order, or simultaneously where appropriate.

It will be understood that the above description of a preferred embodiment is given by way of example only and that various modifications may be made by those skilled in the art. The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the scope of this invention.

## Claims

1. A television receiver apparatus, comprising:
an input interface arranged to receive commands from a user;
a communication interface arranged to send and receive data over a one-to-one communication network;
a broadcast receiver arranged to receive data sent over a broadcast network;
a display interface arranged to connect to a display device; and
a processor arranged to: control the display device using the display interface to display an electronic programme guide comprising a schedule of programmes currently being broadcast, programmes to be broadcast after the current time, and programmes previously broadcast in a time period prior to the current time; receive via the input interface a request to view a selected programme displayed in the electronic programme guide; retrieve the selected programme from the communication network using the communication interface if the selected programme was previously broadcast in the time period; and control the display device using the display interface to display the selected programme.

2. An apparatus according to claim 1, wherein the processor is further arranged to retrieve the selected programme from the broadcast network using the broadcast receiver if the selected programme is currently being broadcast.

3. An apparatus according to claim 1 or 2, wherein the processor is further arranged to determine whether the selected programme is available from the communication network if the selected programme is to be broadcast after the current time.

4. An apparatus according to claim 3, wherein if the processor determines that the selected programme is available from the communication network, the processor is further arranged to the retrieve the selected programme from the communication network using the communication interface.

5. An apparatus according to claim 3 or 4, wherein if the processor determines that the selected programme is not available from the communication network, the processor is further arranged to record the selected programme from the broadcast network using the broadcast receiver at its time of broadcast.

6. An apparatus according to claim 3, 4 or 5, wherein if the processor determines that the selected programme is not available from the communication network, the processor is further arranged to display a reminder message to the user at the time of broadcast of the selected programme.

7. An apparatus according to claim 1, wherein the apparatus further comprises a data storage device, and wherein the processor is further arranged to determine whether the selected programme is stored on the data storage device prior to retrieving the selected programme from the communication network.

8. An apparatus according to any preceding claim, wherein the processor is further arranged to retrieve the electronic programme guide schedule from at least one of: the broadcast network using the broadcast receiver; and the communication network using the communication interface.

9. An apparatus according to any preceding claim, wherein the processor is further arranged to render the electronic programme guide in tabular form for display on the display device.

10. A set-top box comprising the receiver apparatus of any preceding claim.

11. A television set comprising the receiver apparatus of any preceding claim.

12. A method of retrieving a television programme at a television receiver arranged to receive data sent over a broadcast network and send and receive data over a one-to-one communication network, comprising:
controlling a display device connected to the television receiver to display an electronic programme guide comprising a schedule of programmes currently being broadcast, programmes to be broadcast after the current time, and programmes previously broadcast in a time period prior to the current time;
receiving a user request to view a selected programme displayed in the electronic programme guide;
retrieving the selected programme from the communication network if the selected programme was previously broadcast in the time period; and
controlling the display device to display the selected programme.

13. A method according to claim 12, further comprising the step of retrieving the selected programme from the broadcast network if the selected programme is currently being broadcast.

14. A computer program comprising computer program code means adapted to perform all the steps of the method of claims 12 or 13 when said program is run on a computer.

15. A computer program as claimed in claim 14 embodied on a computer readable medium.
